# EUROPÄISCHE PATENTANMELDUNG

(11) **EP 1 474 970 A1**
(43) Veröffentlichungstag der Anmeldung: **10.11.2004**
(21) Anmeldenummer: 04010171.9
(22) Anmeldetag: 29.04.2004
(51) Int. Cl.: A01K 1/12

(54) **Verfahren zur Bestimmung einer Geschwindigkeit eines beweglichen Bodens einer Vorrichtung zum Melken von Tieren, insbesondere eines Melkkarussells**

(30) Priorität: 09.05.2003 DE 10320918
(71) Anmelder: WestfaliaSurge GmbH, 59302 Oelde (DE)
(72) Erfinder: Kaever, Peter, Dr., 59302 Oelde (DE)
(74) Vertreter: Neumann, Ditmar

(57) **Zusammenfassung**

Zur Bestimmung wenigstens einer Bewegungsvorgabe eines Bodens einer Vorrichtung (3), die zum Melken wenigstens eines Tieres geeignet ist, insbesondere eines Melkkarussells, wird ein Verfahren vorgeschlagen, bei dem Daten wenigstens eines Teils der zu melkenden Tiere bereitgestellt werden (1). Bei den Daten (1) handelt es sich um solche Daten, aus denen eine Beziehung zwischen der Vorrichtung (3) und dem Tier hervorgeht. Die aktuelle Konstellation in der Vorrichtung wird ermittelt (2) und eine Bewegungsvorgabe (4) in Abhängigkeit von den Daten (1) und der aktuellen Konstellation (2) bestimmt.

## Beschreibung

Der Gegenstand der Erfindung bezieht sich auf ein Verfahren zur Bestimmung einer Geschwindigkeit eines beweglichen Bodens einer Vorrichtung zum Melken wenigstens eines Tieres.

Obwohl im folgenden die Erfindung mit Bezug auf den Einsatz in Karussellmelkanlagen beschrieben wird, so ist der Einsatz nicht auf Karusselle beschränkt. Wenn im folgenden Bezug auf"Karusselle" genommen wird, so erfolgt damit keine Beschränkung auf sich drehende Anlagen. Von dem Begriff "Karussell" werden im Sinne dieser Anmeldung auch solche Vorrichtungen erfasst, die z.B. einen als Endlosband ausgebildeten Boden aufweisen.

Die Erfindung kann nicht nur beim Melken von Kühen verwendet werden, sondern eignet sich auch für den Einsatz von sonstigen milchabgebenden Tieren und insbesondere auch zum Melken von Schafen, Ziegen, Stuten, Eseln, Büffeln, Dromedaren, Lamas, Kamelen, Yaks und dergleichen mehr.

Zum Melken von Kühen, sind Karussell-Melkanlagen bekannt. Eine solche Karussell-Melkanlage ist beispielsweise in der DE 26 50 741 A1 beschrieben. Die Karussell-Melkanlage weist einen beweglichen Boden auf, auf dem mehrere Melkplätze angeordnet sind. Der Boden ist in Form einer Plattform ausgebildet. Diese ist um eine vertikal verlaufende Achse herum drehbar angeordnet.

Durch die DE 41 01 530 A1 ist eine Karussell-Melkanlage mit einer drehangetriebenen, kreisförmigen Plattform für Kühe bekannt. Die Plattform ist in einzelne Melkplätze unterteilt, die auf eigenen, fahrbaren Segmenten angeordnet sind, deren Laufrollen auf ortsfesten, kreisförmigen Laufschienen abgestützt sind. Der Antrieb für die kreisförmige Bewegung der einzelnen Segmente erfolgt durch einen direkt auf einer der Gondeln angeordneten Antriebsmotor. Der Antriebsmotor wird durch einen oder mehrere Hydraulikmotoren und eine durch einen Elektromotor angetriebene Hydraulikpumpe gebildet. Im Betrieb wird der Elektromotor durch Steuersignale geregelt, so dass die Hydraulikpumpe die Hydraulikmotoren mit Hydrauliköl versorgt. Das Melkkarussell verfährt nach dem Vorschlag der DE 41 01 530 A1 im Normalbetrieb kontinuierlich, wobei die Kühe während eines Umlaufs gemolken werden. Es besteht auch die Möglichkeit, dass die Kuh für einen weiteren Umlauf auf der Plattform verbleibt.

Durch die EP 0 717 590 B1 ist eine weitere Ausführungsform einer Karussell-Melkanlage bekannt. Die Geschwindigkeit der Plattform ist durch eine Steuerund Antriebseinrichtung so eingestellt, dass am ersten Kontrollpunkt die überwiegende Anzahl der Melkzeuge noch nicht abgezogen und am zweiten Kontrollpunkt die überwiegende Anzahl der Melkzeuge abgezogen ist.

In der Praxis wird zur Einstellung der (Dreh-)Geschwindigkeit die maximale Melkdauer herangezogen. Bei größeren Melkkarussellen stößt diese Bestimmung der Geschwindigkeit aus der Melkdauer auf praktische Beschränkungen, da sie zu einer starken Erhöhung der Geschwindigkeit führen kann. Wenn die Tiere einige Plätze vor dem Austrittsbereich ausgemolken sein sollen, steigt bei vorgegebener Melkdauer die Geschwindigkeit mit der Zahl der Karussellplätze. Aus Sicherheitsgründen werden daher fest vorgeschriebene Sicherheitsschwellwerte definiert, die ein Ausreißen der Geschwindigkeits-Sollwerte außer Kraft setzen. Im Bedarfsfall wird die Geschwindigkeit durch manuelle Eingriffe verändert. Eine solche Notwendigkeit besteht insbesondere dann, wenn kranke Tiere und insbesondere Tiere, die in der Anlage neu sind, für den Einstieg bzw. Ausstieg eine verringerte Geschwindigkeit der Plattform benötigen. Daraus ergibt sich eine Beschränkung der Betriebsparameter gerade bei größeren Melkkarussellen.

Darüber hinaus sind auch Vorrichtungen bekannt, die einen Boden aufweisen, der als ein Endlosband ausgebildet ist.

Hiervon ausgehend liegt der vorliegenden Erfindung die Zielsetzung zugrunde, ein Verfahren zur Bestimmung einer Bewegungsvorgabe für ein Melkkarussell anzugeben, durch das ein verbesserter Betrieb der Vorrichtung erzielt wird.

Diese Aufgabe wird erfindungsgemäß durch ein Verfahren mit den Merkmalen des Anspruchs 1 und durch eine Vorrichtung mit den Merkmalen des Anspruchs 21 gelöst. Vorteilhafte Weiterbildungen sind Gegenstand der abhängigen Ansprüche.

Zur Bestimmung einer Bewegungsvorgabe für ein Melkkarussell (z.B. der Geschwindigkeit) wird ein Verfahren vorgeschlagen, bei dem Daten wenigstens eines Teils der zu melkenden Tiere, bereitgestellt werden. Die aktuelle Konstellation in der Vorrichtung wird ermittelt und eine Bewegungsvorgabe in Abhängigkeit von den Daten und der aktuellen Konstellation bestimmt. Vorzugsweise stehen die Daten in einer Beziehung zwischen der Vorrichtung und dem Verhalten des Tieres.

Aus der Gesamtheit dieser Daten ergibt sich die konkrete Konstellation, in der die Vorrichtung, insbesondere ein Melkkarussell betrieben wird. Aus der aktuellen Konstellation wird die Bewegungsvorgabe für das Karussell bestimmt.

Unter Bewegungsvorgaben sind dabei z.B. Vorgaben für den Geschwindigkeitssollwert zu verstehen. Eine Bewegungsvorgabe kann eine Vorgabe für die Beschleunigung oder das Abbremsen, sowie eine Vorgabe der Verfahrprofile der Geschwindigkeit und Beschleunigung sein, wie sie für den Betrieb des Karussells geeignet sind.

Zur Vereinfachung der Darstellung und besseren Anschaulichkeit wird im folgenden alternativ zu Bewegungsvorgaben von Verfahrvorgaben oder von Geschwindigkeitsvorgaben gesprochen. Im Sinne dieser Anmeldung sind die Begriffe synonym als "Bewegungsvorgabe" zu verstehen.

Unter einer aktuellen Konstellation wird wenigstens eine Situation verstanden, die den aktuellen Betriebszustand der Vorrichtung und/oder die aktuelle Situation wenigstens eines Tieres innerhalb oder außerhalb der Vorrichtung wenigstens teilweise wiedergibt.

Unter einer typischen Konstellation wird wenigstens eine Situation verstanden, die den typischen Betriebszustand der Vorrichtung und/oder die typische Situation wenigstens eines Tieres innerhalb oder außerhalb der Vorrichtung wenigstens teilweise wiedergibt.

Unter einer konkreten Konstellation wird eine Situation verstanden, die einen konkreten Betriebszustand der Vorrichtung und/oder die konkrete Situation wenigstens eines Tieres innerhalb oder außerhalb der Vorrichtung wenigstens teilweise wiedergibt.

Die aktuelle Konstellation kann z.B. durch einen n-dimensionalen Parametervektor beschrieben werden, dessen einzelne Elemente Kenngrößen für die aktuelle Situationen wiedergeben. Parameter sind hier Variablen.

Diese ergibt sich zunächst aus wenigstens einem Teil der Tiere im Einflußbereich der Vorrichtung, welche beispielsweise behandelt, angesetzt, stimuliert, gemolken, bzw. nachgedippt werden oder bei denen eine Euterreinigung oder Sinnfälligkeitskontrolle stattfindet. Insbesondere das Betreten oder Aussteigen stellen besondere Situationen dar, die in die Konstellation einfließen können. Weitere Situationen, welche in die Konstellation einfließen können, sind z.B. das Abschlagen von Melkzeugen und weitere Ereignisse, die für das Tier auf der Plattform auftreten können.

In einer bevorzugten Weiterbildung kann die Konstellation aus Herdendaten oder aus den Daten der auf dem Karussell befindlichen Tiere ermittelt werden. Das hat den Vorteil, dass im wesentlichen Daten verwendet werden, die schon zur Verfügung stehen, so dass aufwändige zusätzliche Sensoren nicht unbedingt benötigt werden.

Grundsätzlich ist folgender Ablauf in einem Melkkarussell möglich. Zunächst erfolgt der Zutrieb der Tiere. Anschließend findet der Einstieg der Tiere statt. Die Euter der Tiere können im Karussell oder auch davor vorbehandelt werden. Dabei ist auch ein Vordippen möglich. Im Anschluß daran oder vor dem Vordippen kann das Euter im Bedarfsfalle gereinigt werden. Nach oder auch vor dem Ansetzen der Melkbecher können die Zitzen stimuliert werden. Danach wird gemolken und bei Melkende werden die Zitzenbecher abgenommen. Weiterhin kann das Euter nachbehandelt werden. Im Rahmen einer Nachbehandlung können die Zitzen nachgedippt werden. Es kann eine Euterkontrolle folgen. Nach dem Ausstieg können die Tiere weggetrieben werden.

Durch das erfindungsgemäße Verfahren wird die Bewegungsvorgabe für ein Melkkarussell den unterschiedlichen Anforderungen angepasst.

In einer bevorzugten Weiterbildung wird die aktuelle Konstellation durch Gewichtung einzelner Situationen in der Vorrichtung ermittelt. Hierbei werden wenigstens zwei Situationen berücksichtigt. Das können Situationen wie z. B. Einstiegsphase, Präparationsphase, Melkphase, Nachbehandlungsphase und Ausstiegsphase des Tieres sein, die je nach Ausgestaltung unterschiedlich beurteilt und parametriert werden. Die unterschiedlichen Phasen können Eingang in die Bestimmung der aktuellen Situation finden.

An der Plattform kann es mehrere Einstiegs- und Ausstiegspositionen mit den dazu erforderlichen Zuwegen geben. Während des Melkens werden die auf der Plattform befindlichen Tiere von einer Einstiegsposition zu einer Ausstiegsposition gefahren. Dabei kann die Melkroutine mit allen dazu erforderlichen Schritten ausgeführt werden. Vorteil des Melkens im Karussell ist ein sehr effizienter Ablauf für das Melkpersonal, das alle erforderlichen Arbeitsgeräte in der Nähe halten kann, während die Tiere an den verschiedenen Stationen wie z.B. Dippen, Euterreinigung, Sinnfälligkeitskontrolle, Stimulation, Ansetzen, Nachdippen, etc. vorbeifahren.

Die Geschwindigkeit der Plattform kann z.B. über die Drehgeschwindigkeit eines z.B. elektrischen Antriebsmotors gesteuert werden. Alternativ hierzu kann ein elektrisch gesteuertes Proportionalventil im Ölstrom die Geschwindigkeit des Hydraulikmotors und somit der Plattform verändern.

Eine weitere Möglichkeit bei mehreren Ausstiegspositionen besteht darin, dass ein Tier an einer oder mehreren Ausstiegspositionen vorbeifährt um dann auszusteigen, wenn es weitgehend ausgemolken ist oder der Bediener den Ausstieg veranlasst.

Die Aufteilung des Weges von der Konstellation der Tierdaten bis zur Bestimmung der Karussellgeschwindigkeit in 2 Schritten dient hier nur der Verdeutlichung des Verfahrens und stellt keine Einschränkung bei der Realisierung dar. Die Bezeichnung einzelner Schritte als Module ("Einsteigen", "Vorbereiten", "Verfahren auf der Plattform",...) soll lediglich die Darstellung klarer gestalten. Beide Schritte können auch in einem Verfahrenschritt zusammengefasst oder weiter untergliedert werden.

In der Ausgestaltung des Verfahrens wird vorgeschlagen, wie oben erläutert, zu den einzelnen Bereichen wie "Zutrieb" oder "Vordippen, Reinigen" aus den Daten der Tiere mit Hilfe der Module Vorgaben für die Geschwindigkeit zu ermitteln. Erfindungsgemäß wird dabei mindestens ein Bereich der Konstellation und somit der Tierdaten berücksichtigt.

Die Zuordnung der Module zur Erzeugung von Verfahrvorgaben für die "Koordination der Vorgaben" erstreckt sich prinzipiell auf die gesamte Konstellation. Die oben erläuterte Zuordnung stellt dabei eine vorteilhafte Aufteilung dar. Ein wichtiges Merkmal ist die Berücksichtigung einer Mehr- oder Vielzahl von Vorgängen (oder sogar aller) in der Melkanlage, insbesondere von Vorgängen der mit dem Melkbetrieb verbundenen Betriebsart. Dies kann so geschehen, dass im Bereich "Einsteigen" die Situation der Tiere im Hinblick auf das Betreten des Karussells bewertet wird und daraus Werte zur Bestimmung der Verfahrvorgaben ermittelt werden.

In gleicher Weise können in den Bereichen "Stimulieren, Melken, Abnehmen, Wiederansetzen, Behandeln" durch das Modul "Verfahren auf der Plattform" Vorgaben erzeugt werden, die zum Verfahren des Karussells dienen.

Z.B. kann beim Abschlagen eines Melkzeuges bei einem Tier die Vorgabe für die Verfahrdauer bis zum Ausstieg verlängert werden, um den Bedienern ausreichend Zeit zum Wiederansetzen zu geben oder nach dem Wiederansetzen die geschätzte Zeit zum Ausmelken und den verbleibenden Weg bis zum Ausgang zu verwenden, um Verfahrvorgaben zu ermitteln.

Bei der Behandlung von Tieren kann die Einwirkzeit und der Weg von der Behandlungsposition bis zur Kontrollposition verwendet werden, um die Verfahrvorgaben zu bestimmen. Z.B. kann beim Einsteigen unerfahrener Tiere die Geschwindigkeit automatisch reduziert werden, um dem Tier beispielsweise doppelt soviel Zeit zum Einsteigen wie trainierten Tieren zu geben.

Beim Ansetzen kann beim Kannenmelken oder bei Drei- oder Zweistrichkühen wiederum zusätzlich Zeit für diese Tätigkeit gegeben werden. Diese Beispiele machen deutlich, dass ein optimierter Betrieb von Melkkarussellen sich je nach Situation anders darstellen kann.

In diesem Bereich spielt auch der (aktuelle) Gesamtbetriebsmodus der Anlage wie zum Beispiel "erste bzw. letzte Runde Melken", "Melken", "Spülen der Melkanlage", "Reinigen der Plattform", "Verfahren in Waschposition" oder dergleichen eine Rolle. Der Gesamtbetriebsmodus wirkt auf die einzelnen Module ein, er kann aber insbesondere so gestaltet werden, dass er auf die "Koordination der Verfahrvorgaben" wirkt. Dieser Koordinationseinrichtung kommt die Aufgabe zu, aus der Gesamtheit der Verfahrvorgaben der einzelnen Module in Abstimmung mit dem Betriebsmodus der Anlage eine Verfahrvorgabe für das Melkkarussell zu erzeugen.

Bei der Bestimmung der Verfahrvorgaben können die Verfahrvorgaben der einzelnen Module entsprechend gewichtet werden. Die einzelnen Situationen bzw.

Phasen können in weitere Teilabläufe unterteilt oder aber zusammengefasst werden.

Der zu einer Situation bzw. Phase zugeordnete Vorgabewert ist vorzugsweise ein dynamischer Wert, der sich wiederum aus der Gesamtsituation ergibt. Es ist nicht zwingend, dass zu identischen Situationen beispielsweise einer Melkphase der gleiche Vorgabewert zugeordnet wird. Dieser Vorgabewert kann von den tierindividuellen Daten abhängig sein, so dass ein einer Situation zugeordneter Geschwindigkeitswert von der Situation als solcher und von Daten, insbesondere von tierindividuellen Daten abhängig sein kann.

Der Vorgabewert, der beispielsweise einer die Präparationsphase beschreibende Situation zugeordnet ist, kann auch von den einer Bedienperson zugeordneten Daten abhängig sein, sofern die Präparation manuell erfolgt. Bei automatischer Vorbereitung kann eine Generierung von Verfahrvorgaben wiederum an die Taktzahl des Automatisierungsgerätes angepasst erfolgen. Dabei sind Automatisierungsgeräte an unterschiedlichen Stationen des Melkprozesses vorstellbar. Das Verfahren schließt eine Berücksichtigung der Vorgaben durch derartige Automatisierungsgeräte ein, insbesondere dann, wenn sie den Melkablauf durch Prozessoder Taktzeiten beeinflussen.

Da beispielsweise bei einem Melkkarussell Tiere das Melkkarussell betreten, während andere Tiere das Melkkarussell verlassen und während des Verfahrens - Bewegens - des Bodens, insbesondere einer Plattform einer Karussell-Melkanlage, beispielsweise eine Präparation und ein Melkvorgang an den einzelnen Tieren durchgeführt wird, ist es von Vorteil, wenn die aktuelle Konstellation kontinuierlich oder diskontinuierlich ermittelt wird.

Es ist in der Regel hinreichend, wenn die aktuelle Konstellation in vorgegebenen Zeitabständen ermittelt wird, da auch hierdurch ein verringerter apparativer Aufwand notwendig ist. Die Zeitabstände, innerhalb derer die aktuelle Konstellation ermittelt wird, können zwischen wenigen Sekunden und mehreren Minuten je nach Betriebszustand liegen.

Nach einer weiteren vorteilhaften Ausgestaltung des Verfahrens wird vorgeschlagen, dass zu den einzelnen Situationen aus den Daten der Tiere Vorgabewerte für die Geschwindigkeitswerte ermittelt und aus der Gesamtheit der Vorgabewerte für die Geschwindigkeit eine Geamtgeschwindigkeit bestimmt wird.

Bei der Bestimmung des Vorgabewertes für die Geschwindigkeit des Bodens können die einzelnen Geschwindigkeitswerte entsprechend gewichtet werden. Die einzelnen Situationen bzw. Phasen können in weitere Teilabläufe unterteilt oder aber zusammengefasst werden.

Bei einer noch weiteren Verfeinerung der Abläufe kann die Geschwindigkeit des Bodens ermittelt werden, die an die Gesamtsituation bzw. Konstellation in der Vorrichtung vorteilhaft angepasst ist.

Gemäß einer noch weiteren vorteilhaften Ausbildung des Verfahrens wird vorgeschlagen, dass eine Ermittlung der aktuellen Konstellation durch Eintritt wenigstens eines Ereignisses ausgelöst wird. Ein Eintritt wenigstens eines Ereignisses kann beispielsweise dadurch festgestellt werden, dass Tiere ein- oder aussteigen oder aber ein Melkzeug an ein Tier angelegt wird. Hierdurch wird z.B. die Information geliefert, dass ein Melkvorgang beginnt.

Wird festgestellt, dass ein Melkvorgang gestartet wurde, so wird überprüft, in wieweit der soeben gestartete Melkvorgang einen signifikanten Einfluss auf die aktuelle Geschwindigkeit der Vorrichtung haben könnte. Ergibt eine solche Überprüfung z.B. innerhalb des Moduls "Verfahren auf der Plattform", dass eine Geschwindigkeitsanpassung notwendig wäre, so kann gegebenenfalls vor der Durchführung der Geschwindigkeitsanpassung überprüft werden, ob durch prognostizierte weitere Ereignisse eine Geschwindigkeitsanpassung auch tatsächlich erfolgen sollte.

Wird beispielsweise festgestellt, dass durch den gerade aktuell gestarteten Melkvorgang die Geschwindigkeit der Vorrichtung erhöht werden sollte, und ist des weiteren bekannt, dass im Eintrittsbereich ein Tier sich befindet, welches für das Betreten der Vorrichtung eine verringerte Geschwindigkeit des Bodens der Vorrichtung benötigt, so wäre eine Erhöhung der Geschwindigkeit aufgrund des Auslösens des Melkvorgangs kontraproduktiv zu der bevorstehenden Verringerung der Geschwindigkeit, so dass entweder die aktuelle Geschwindigkeit beibehalten wird, oder ein Abbremsvorgang der Vorrichtung eingeleitet wird, da bekannt ist, dass im Eintrittsbereich ein "problematisches" Tier bereitsteht. Die Entscheidung erfolgt aufgrund der weiteren Daten der aktuellen Konstellation.

Ein weiteres Beispiel für ein derartiges Ereignis stellt das Abschlagen eines Melkzeuges durch ein Tier dar, wodurch sich die erwartete Melkdauer für das Tier deutlich erhöht und ein Anpassen der Verfahrvorgaben erforderlich machen kann.

Es besteht auch die Möglichkeit, dass die Abnahme des Melkzeugs ein Kriterium für eine erneute Ermittlung der aktuellen Situation bildet, da hierdurch die Information zur Verfügung gestellt wird, dass ein Melkvorgang beendet wurde. Auch der Eintritt eines Tieres in die Vorrichtung bzw. der Austritt eines Tieres aus der Vorrichtung können solche Ereignisse darstellen. Im wesentlichen kann ein jedes Ereignis, welches einen charakteristischen Zeitpunkt oder den Beginn oder das Ende einer Handlung am Tier darstellen, als Auslöseindikatoren genutzt werden.

Nach einer noch weiteren vorteilhaften Ausbildung des Verfahrens wird vorgeschlagen, dass das Verhalten einzelner Tiere sensorisch erfasst und mit den zu dem betreffenden Tier bekannten Daten verglichen wird. Zeigt sich, dass die sensorisch erfassten Daten außerhalb eines Toleranzfeldes liegen, so können die gespeicherten Daten der einzelnen Tiere entsprechend aktualisiert werden. Eine Aktualisierung der Daten ist insbesondere dann vorteilhaft, wenn sich beispielsweise ein Tier an das Betreten der Vorrichtung gewöhnt hat, und dies zügig tut. Ist dies der Fall, so führen die verbesserten Daten des Tieres zu einer positiven Beeinflussung der Geschwindigkeit.

Eine Rückführung manueller Vorgaben ohne zusätzliche Sensoren ist in Hinblick auf diesen Aspekt ebenfalls vorteilhaft möglich. Wenn problematische Tiere beim Ein- oder Aussteigen oder beim Ansetzen mehr Zeit benötigen, lässt sich dies in den Datensatz des Tieres eintragen und bei der Bewertung künftiger Konstellationen berücksichtigen, was dazu verwendet werden kann, dass bei Wiedereintritt dieser Situation mehr Zeit für den entsprechenden Vorgang reserviert wird. Auch eine Berücksichtigung eines Lemerfolges anhand der statistisch gespeicherten Daten ist möglich, so dass das System mit kürzer werdender Einstiegszeit diese registriert und weiterhin berücksichtigt.

Ist ein Tier erkrankt und hierdurch beispielsweise in dem Bewegungsvermögen behindert, so wird durch die Anpassung der Daten, die zur Bestimmung der Geschwindigkeit herangezogen werden, eine Verringerung der Geschwindigkeit bewirkt, da die Geschwindigkeit nunmehr an das veränderte Verhalten des Tieres angepasst wird.

Das Verhalten einzelner Tiere wird vorzugsweise wenigstens im Eingangsund/oder wenigstens im Ausgangsbereich der Vorrichtung erfasst, da sie in diesem Bereich den höchsten Freiheitsgrad haben. Das Verhalten der einzelnen Tiere kann auch während des Melkvorgangs erfasst werden, wobei das Verhalten hier das Melkverhalten als solches beschreibt. Aufgrund des Laktationsstandes oder bedingt durch pathologische Veränderungen des Euters kann es auch zu einer Veränderung der Melkdauer kommen, die über das Modul "Verfahren auf der Plattform" einen Einfluss auf die Geschwindigkeit der Vorrichtung haben kann. Zu Modulen können bestimmte Behandlungen, Betriebsarten bzw. Konstellationen der Vorrichtung zusammengefasst werden. Das bietet die Möglichkeit, die Vorrichtung geeignet zu steuern. Zu Modulen zählen z.B. das Einsteigen, das Vorbereiten, das Verfahren auf der Plattform, das Nachbehandeln und das Aussteigen.

Nach noch einer weiteren vorteilhaften Ausgestaltung des Verfahrens wird vorgeschlagen, dass die Verfahrvorgaben bzw. die Geschwindigkeit und die zugehörige Konstellation bzw. der Verlauf der Verfahrvorgaben bzw. der Geschwindigkeit und der Konstellationen gespeichert werden und Ausgangsgrößen zur Bestimmung einer neuen Verfahrvorgabe bzw. einer neuen Geschwindigkeit bei vergleichbarer Konstellation bilden. Durch diese Vorgehensweise wird die Reaktionszeit, die notwendig ist, um die Verfahrvorgabe bzw. die Geschwindigkeit zu bestimmen und entsprechend einzustellen, verringert, da die Anzahl der Daten, die ausgewertet werden, verringert werden.

Es bedarf lediglich der Bestimmung der Abweichung um zu einer ersten Näherung an eine Geschwindigkeit, die der Konstellation angepasst ist, zu gelangen. Bei einer großen Anzahl an bekannten Konstellationen und der zugehörigen Geschwindigkeiten kann auch die Geschwindigkeit aus den bekannten Geschwindigkeiten und Konstellationen prognostiziert werden, was beispielsweise durch Extrapolation oder Interpolation erfolgen kann.

Gemäß einer noch weiteren vorteilhaften Ausgestaltung des Verfahrens wird vorgeschlagen, dass aus den Daten zu jedem Tier ein Profil bzw. Tierprofil erstellt wird. Dann kann die Positionierung der Tiere in Abhängigkeit von den Tierprofilen erfolgen. Z.B. können Tiere mit vergleichbaren oder ähnlichen Profilen nebeneinander angeordnet werden und eine Belegung der Vorrichtung nach vorgegebenen Referenzen der Profile erfolgt. Durch diesen Vorschlag wird erreicht, dass die Belegung der Vorrichtung mit Tieren vergleichbarer oder aufeinander abgestimmter Profile erfolgt, so dass der Aufwand zur Bestimmung der Geschwindigkeit einer beweglichen Vorrichtung verringert werden kann.

Durch die Verwendung von Tierprofilen können auch Gruppen von Tieren gebildet werden, die in einem bevorzugten Verfahrmodus auf der Vorrichtung verfahren werden. Hierbei kann es sich beispielsweise um erkrankte Tiere handeln. Diese Variante kann auch zweckmäßig sein für Tiere, die sich innerhalb eines Lernprozesses befinden, durch den die Akzeptanz der Vorrichtung durch das Tier erhöht werden soll.

Es wird auch die Möglichkeit der manuellen Eingriffe während des Betriebes der Vorrichtung gegeben. Finden manuelle Eingriffe statt, so wird deren Ursache erfasst und bei der Bestimmung einer neuen Geschwindigkeit berücksichtigt werden. Beispielsweise kann aus manuellen Eingriffen eines Betreibers der Vorrichtung während des Einstiegsvorgangs des Tieres eine Historie aufgebaut werden, aus der z. B. ein günstiger Wert für den nächsten Einstiegsvorgang abgeleitet werden kann. Da die Einstiegszeit eines Tieres aus der Historie oder durch z.B. das Verfolgen manueller Eingriffe bekannt ist, lässt sich daraus durch Auswertung der Daten ein Vorgabewert für die Einstiegszeit ermitteln. Hieraus kann dann in entsprechender Weise die Geschwindigkeit bestimmt werden.

Die automatischen Nachführungen von Parametern z. B. der Einstiegsdauer im Herdenmanagement, in dem die Daten der Tiere gespeichert sind, wird durch Hinterlegen einer Lernkurve möglich, gemäss der ein durchschnittliches Tier sich an das Melken in der Vorrichtung, insbesondere in der Karussell-Melkanalage, gewöhnt. Damit werden die Vorgaben an das Tier allmählich an das Niveau eines erfahrenen Tieres herangeführt.

Die erfindungsgemäße Vorrichtung ist zum Melken einer Mehrzahl an Tieren geeignet. Die Vorrichtung umfasst wenigstens eine bewegbare Plattform. Es ist wenigstens ein Eingangsbereich und wenigstens ein Ausgangsbereich vorgesehen, damit die Tiere die Plattform betreten und wieder verlassen können. Wenigstens eine Steuerungseinheit ist zur Steuerung der Vorrichtung vorgesehen. Wenigstens eine Speichereinheit ist vorgesehen. In wenigstens einer Speichereinheit sind Tierdaten der Tiere abgelegt. Wenigstens eine Sensoreinrichtung dient zur Erkennung der Tiere. Die Steuerungseinheit ist derart ausgebildet und steuerbar, dass aus den Tierdaten eine geeignete Verfahrvorgabe für die bewegbare Plattform ermittelbar ist.

Vorzugsweise ist wenigstens eine Sensoreinrichtung derart angeordnet, dass Tiere, welche in den Eingangsbereich oder auf die Plattform gelangen erkennbar sind. In einer bevorzugten Weiterbildung ist wenigstens eine Selektionseinrichtung vorgesehen, welche derart strukturiert ist, dass die Reihenfolge der Tiere auf der Plattform beeinflussbar ist, um eine gewünschte Verfahrvorgabe zu erzielen. Vorzugsweise ist mit der Steuereinrichtung die Selektionseinrichtung derart steuerbar, dass Tiere mit vergleichbaren Tierdaten benachbart auf der Plattform platzierbar sind.

In der erfindungsgemäßen Vorrichtung werden Tierdaten gespeichert. Insbesondere werden Informationen zur Melkdauer, zur Anzahl der Striche, zu Tierbehandlungen. zu Trainingswerten bei der Benutzung des Karussells oder zu Verhaltensdaten wie Nervosität in einer Speichereinrichtung abgelegt.

Vorzugsweise wird mindestens ein Teil der Konstellation innerhalb einer Steuerungseinheit ausgewertet, woraus Verfahrvorgaben insbesondere für die Geschwindigkeit entstehen. Vorteilhafterweise steht bei der Vorrichtung, auch der Betriebszustand in der Steuerungseinheit zur Verfügung.

Die Vorrichtung ist vorzugsweise derart ausgebildet, dass mittels des Betriebszustandes aus den einzelnen Verfahrvorgaben für die Teile der Konstellation ein gemeinsamer Gesamtwert für die Verfahrvorgaben gebildet wird.

In einer oder mehrerer der zuvor beschriebenen Weiterbildungen der erfindungsgemäßen Vorrichtung ist die Steuer- bzw. Recheneinrichtung derart ausgebildet, dass der Gesamtwert durch Priorisierung der Konstellationsteile gebildet wird.

Vorzugsweise wählt die Vorrichtung den Gesamtwert zur Gefahrenabschätzung derart, dass beispielsweise die geringste (optimale) Geschwindigkeit gewählt wird.

Bevorzugt ist eine Vorrichtung, bei der zur Verminderung der Belastung der Mechanik eine Glättung der Verfahrvorgaben durchgeführt wird. Dies kann insbesondere im Hinblick auf die Beschleunigung geschehen.

Bei der Bestimmung der Verfahrvorgaben für Teilelemente der Konstellation werden die Verfahrvorgaben im Ein- oder Ausstiegsbereich vorzugsweise so berechnet, dass ein ein- oder aussteigendes Tier die ihm zugestandene Zeit für diese Vorgänge erhält. Vorteilhafterweise werden Verfahrvorgaben im Vorbereitungsbereich so berechnet, dass das Personal die erforderliche Zeit beispielsweise für Vordippen und Reinigen erhält. Dementsprechend kann bei der Nachbehandlung verfahren werden.

Vorzugsweise werden Verfahrvorgaben für das Verfahren der Plattform so berechnet, dass (im wesentlichen) alle Tiere ausgemolken sind, bevor sie in den Nachbehandlungsbereich einfahren. Ohne Einschränkung kann dazu auch ein Ausmelkgrad definiert werden, welcher dann in die Bewertung einfließt.

Dabei kann sowohl die erwartete Melkdauer als auch die abgegebene Milch als auch der Verlauf der Milchkurve zur Bewertung herangezogen werden. Beim Abtreten von Melkzeugen ergibt sich aus dem Betriebsparametern, ob die Steuerungseinheit nach dem Ansetzen die (u.U. sogar stark) verlängerte Melkdauer berücksichtigt oder derartige Ausnahmesituationen verwirft.

Bevorzugt ist eine Vorrichtung, bei der Automatisierungskomponenten beispielsweise zum Ansetzen oder Säubern oder unterstützender Handhabungen enthalten sind und deren Verhalten mit Verfahrvorgaben der Steuerungseinheit zu koordinieren sind.

Möglich ist auch eine Weiterbildung der erfindungsgemäßen Vorrichtung, bei der die Taktdauer der am Melkprozess beteiligte Automatisierungskomponenten mit der Taktzahl der Karussellplätze (im wesentlichen) synchronisiert wird.

Vorzugsweise wird die Vorrichtung derart ausgebildet, dass die Steuerungseinheit Synchronisationssignale an Automatisierungskomponenten des Karussells oder arrondierte Automatisierungseinrichtungen ausgibt.

Bevorzugt sind auch Ausgestaltungen der Vorrichtung, bei der auch Automatisierungskomponenten mit der Taktzahl des Karussells synchronisiert werden.

Das erfindungsgemäße verfahren und die erfindungsgemäße Vorrichtung verarbeitet vorzugsweise Rückmeldungen der einzelnen Komponenten.

In der Vorrichtung werden die Tierdaten bei z.B. Ein- oder Ausstiegsproblemen angepasst und beispielsweise an die Datenbank des Herdenmanagements zurückgegeben. Die Art, Häufigkeit und die Zeitpunkte der Bedienereingriffe können zur Anpassung der Geschwindigkeit in der Speichereinrichtung der Vorrichtung abgelegt werden, z.B. mit Bezug auf den Bediener.

Weitere Einzelheiten und Vorteile des erfindungsgemäßen Verfahrens und der erfindungsgemäßen Vorrichtung werden anhand der schematischen Darstellungen in den Zeichnungen erläutert.

Darin zeigen:

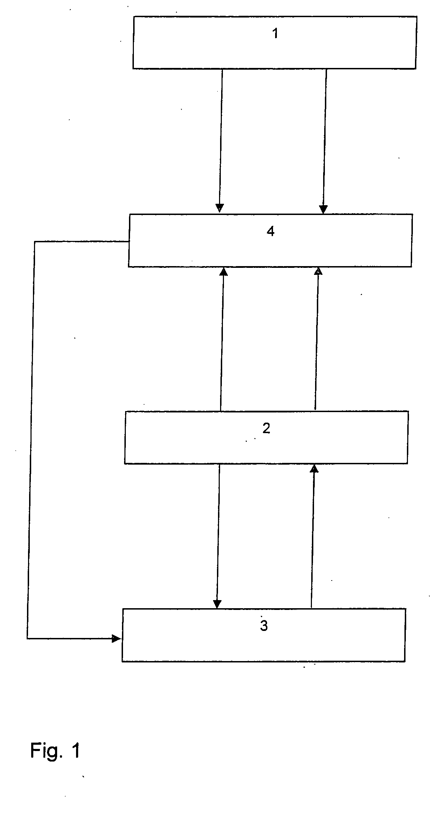

- Figur 1: eine schematische Darstellung des erfindungsgemäßen Verfahrens,
- Figur 2: eine schematisch dargestellte erfindungsgemäße Vorrichtung,
- Figur 3: eine Lemkurve mit der Einstiegszeit eines unerfahrenen Tieres mit der Zeit,
- Figur 4: ein Schema mit verschiedenen Konstellationen der Vorrichtung, und
- Figur 5: ein Schema des Zusammenwirkens verschiedener Konstellationen und Module.

In der Darstellung werden Daten der Tiere durch eine Herdenmanagement-Einheit 1 bereitgestellt. Die Daten der Tiere umfassen im wesentlichen die relevanten Daten bezüglich des Verhaltens des Tieres während einer Einstiegsphase, einer Präparationsphase, einer Ansetzphase, einer Melkphase, einer Nachbehandlungsphase und der Ausstiegsphase, sowie bei Behandlungszeiten bei Erkrankungen. Die einzelnen Phasen können in weitere Vorgänge unterteilt werden. Mittels dieser Tierdaten können unterschiedliche Situationen in der Vorrichtung beschrieben werden. Weitere dort hinterlegte Daten können die Arbeitsgeschwindigkeit des Bedienpersonals z.B. für das Einhängen einer Kanne, für die Behandlung von Drei-, Zwei- oder Einstrichtieren bzw. ähnlicher Besonderheiten wiedergeben.

Durch eine geeignete Einrichtung 2 (z.B. Sensorik) kann die aktuelle Konstellation in der Vorrichtung 3 ermittelt werden. In Kenntnis der aktuellen Konstellation in der Vorrichtung und unter Heranziehung der Daten kann die Geschwindigkeit in Abhängigkeit von den Daten und der aktuellen Konstellation durch eine entsprechende Einrichtung 4 bestimmt werden. Die Einrichtung 4 sendet Signale an die nicht dargestellte Antriebseinheit des Bodens.

Die aktuelle Situation in der Vorrichtung kann beispielsweise durch "erstes Befüllen des Karussells", "Melkbetrieb", "Behandlung kranker Tiere", "Erlernen von Tieren", "Waschen der Anlage", "Waschen des Karussells", "Verfahren in Waschposition" etc. beschrieben werden. In Abhängigkeit von der aktuellen Konstellation können einzelne Situationen bei der Bestimmung der Geschwindigkeit unberücksichtigt bzw. höher priorisiert werden. Es besteht auch die Möglichkeit die einzelnen Konstellationen als Vorgaben zu definieren, die manuell aktiviert werden können.

Auf diese Art und Weise besteht beispielsweise die Möglichkeit, bei einem neuen, kranken oder sehr nervösen Tier durch die Wahl der Situation "Einsteigen" Geschwindigkeitswerte zu generieren, die zu einer geringeren Geschwindigkeit oder gar zu einem Anhalten am Platz führen. Aus der Tierinformation heraus kann die Information extrahiert werden, dass nun ein Tier den Einstiegsbereich betritt, welches besonders langsam ist. Dies kann insbesondere dazu führen, dass die Geschwindigkeitswerte zu der Situation "Einsteigen" mit einer höheren Priorität bei der Bestimmung bei der Geschwindigkeit der Vorrichtung berücksichtigt wird.

In einer weiteren Ausgestaltung des Verfahrens kann aus den im Herdenmanagement gespeicherten Datensätzen abgeleitet werden, ob z.B. zur Präparation der Tiere unterschiedliche Zeiten erforderlich sind. Besteht die Notwendigkeit, dass ausgewählte Tiere einer besonderen Behandlung zugeführt werden, ist es zweckmäßig, wenn die Tiere in der Vorrichtung langsam(er) im Vorbereitungsbereich verfahren werden, um dem Bediener genügend Zeit für eine sorgfältige Melkroutine zu geben.

Insbesondere Zeiten zur Pflege des Euters und zur Vorbereitung des Melkplatzes auf Kannenmelken werden auch durch das erfindungsgemäße Verfahren berücksichtigt. Dies kann bei der Auswahl und Speicherung der Tierdaten berücksichtigt werden. Die Tierdaten können zu einer noch verfeinerteren Bestimmung der Geschwindigkeit um Daten, die mit der Betriebsperson zusammenhängt, ergänzt werden. Hierbei kann beispielsweise die Routine des Bedieners bei der Präparation berücksichtigt werden.

Für Tiere mit Erfahrung führt das erfindungsgemäße Verfahren dazu, dass die Vorrichtung auch in dieser Situation mit einer optimalen (hier: höheren) Geschwindigkeit verfahren wird.

In einer anderen Situation, bei der es sich beispielsweise um ein Waschen der Anlage handelt, kann die Verfahrgeschwindigkeit entsprechend berücksichtigt werden.

Eine besondere Situation ergibt sich, wenn durch automatische Ansatzhilfen die Bewegung der Vorrichtung so vorgegeben wird, dass sich die Präparations- und Ansetzvorgänge in harmonischer Weise in die Bewegung der Vorrichtung einfügen lassen. Hierbei übernimmt beispielsweise die Situation "Präparationsphase" die Abstimmung der Geschwindigkeitswerte mit den Automatisierungskomponenten und gibt diese Vorgaben mit höherer Priorität an die Geschwindigkeitsbestimmung weiter. Sobald in diesem Beispiel keine Tiere mehr angesetzt werden müssen, geht die Priorität der Vorgabe auf die "Präparationsphase" zurück und die Vorrichtung erhöht ihre Geschwindigkeit.

Insbesondere das Einsteigen und Aussteigen von Tieren stellt aufgrund des diskontinuierlichen Charakters besondere Anforderungen an den Betrieb des Melkkarussells, die auch zu besonderen Lösungen im Rahmen dieses Verfahrens führen. Insbesondere ein Hineinbremsen in die Einstiegsposition mit nachfolgendem Beschleunigen ist zur Verbesserung des Einsteigeverhaltens möglich. Hierbei ist es nicht zwingend notwendig, dass die Vorrichtung zum Stillstand kommt. Eine Koordination dieser platzorientierten Verfahrvorgaben mit den Verfahrvorgaben der einzelnen Module kann beispielsweise innerhalb der Erzeugung von Verfahrvorgaben durch das Element "Koordination der Verfahrvorgaben" erbracht werden.

Durch das erfindungsgemäße Verfahren zur Bestimmung einer Geschwindigkeit einer beweglichen Vorrichtung mit der wenigstens ein Tier wenigstens während eines Melkvorgangs mitbewegt wird, kann eine verbesserte Anpassung der Geschwindigkeit an die Situation innerhalb der Vorrichtung unter Berücksichtigung der Eigenarten der Tiere erreicht werden. Darüber hinaus lässt sich das Verfahren in Situationen anwenden, die außerhalb des eigentlichen Melkbetriebes liegen, um auch dort ein situativ optimiertes Verfahren und Arbeiten zu ermöglichen.

Beispielhaft seien hier "erste bzw. letzte Runde Melken", "Melken", "Spülen der Melkanlage", "Reinigen der Plattform", "Verfahren in Waschposition" als typische Situationen oder Betriebsarten genannt.

Die Anwendung des bisher geschilderten Verfahrens erlaubt dabei den "stufenlosen" Übergang von einer Betriebsart in die nächste, da wesentliche Informationen wie z.B. der Zustand "Melken" automatisch übertragen werden können und daher in der Steuereinheit vorliegen.

Beispielhaft kann in der letzten Runde nach dem Melken sofort in den Waschmodus umgeschaltet werden. Beim Verlassen der letzten Kuh liegt eine Konstellation vor, aus der sich aufgrund fehlender Tiere keine Vorgaben mehr ableiten, was dazu führt, dass die Betriebsart Waschmodus mit ihrer Priorität die Vorgaben generiert.

Eine schonende Ansteuerung der Karussellaktorik kann innerhalb der "Koordination der Verfahrvorgaben" realisiert werden. Dies kann insbesondere durch Begrenzung von Beschleunigung oder Geschwindigkeit geschehen.

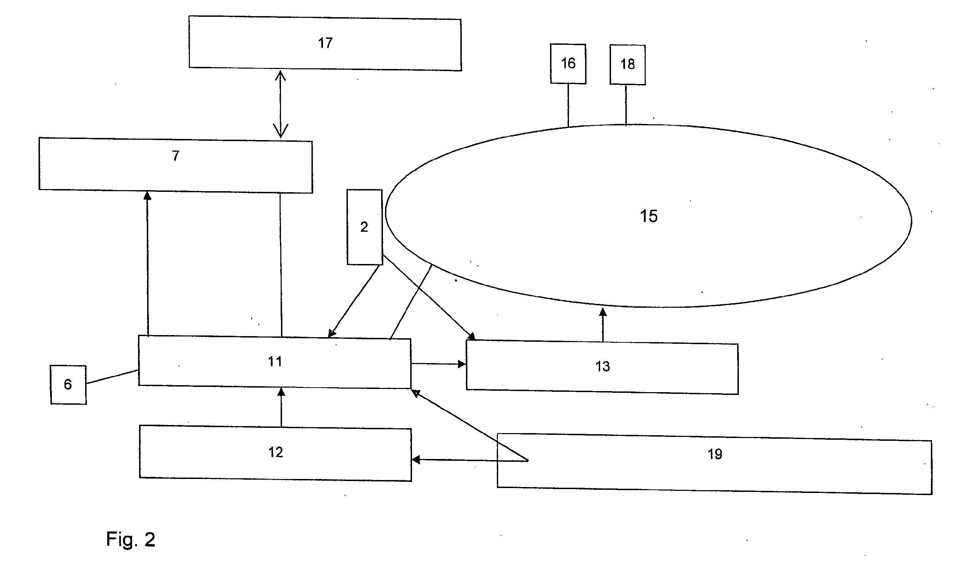

In Figur 2 wird beispielhaft eine schematische Darstellung der Vorrichtung 3 gezeigt, welche eine Steuerungseinrichtung 11 umfasst, mit der das oben beschriebene Verfahren realisiert wird. Wesentliche Daten, die aus der Speichereinrichtung 7 der Steuerungseinrichtung zugeführt werden, sind Bedienereingriffe aus der Bedieneinheit 12 sowie Sensordaten aus dem Karussell. Diese Sensordaten beinhalten sowohl Informationen zur Bewegung des Karussells als auch beispielsweise zu anderen Sensoren wie Quetschendschaltern für die Tiere, Bewegungssensoren oder Sensoren für Tiere oder den Melkvorgang sowie Daten von Automatisierungskomponenten, welche am Karussell angebracht sind. Die Plattform 15 in Form z.B. eines Melkkarussells ist mit einer vorhergehenden Tieridentifikation 18 versehen, um die Tiere zu erkennen und deren spezifische Eigenschaften zu berücksichtigen. Die Vorrichtung 3 kann mit einem (externen) Computer verbunden sein. Die Zustandsgrößen und Betriebsparameter von Melkstandskomponenten 19 wirken auf die Steuereinrichtung 11 ein.

Diese Informationen werden ergänzt um Tierdatensätze und Bedienerdaten, welche aus dem Herdenmanagement 14 stammen können. Innerhalb der Steuereinheit werden die Verfahrvorgaben für die Antriebseinheit 13 erzeugt und von dieser in die Karussellbewegung umgesetzt. Dies kann entweder mit direkter Einkopplung von Bewegungsrückmeldungen in der Antriebseinheit oder aber durch die Steuerungseinheit geschehen.

Auch ein Hineinbremsen in die Einstiegsposition mit nachfolgendem Beschleunigen ist möglich. Hierbei ist es nicht zwingend notwendig, dass die Vorrichtung zum Stillstand kommt. Eine Alarmeinheit 16 dient zur Ausgabe von Alarmsignalen.

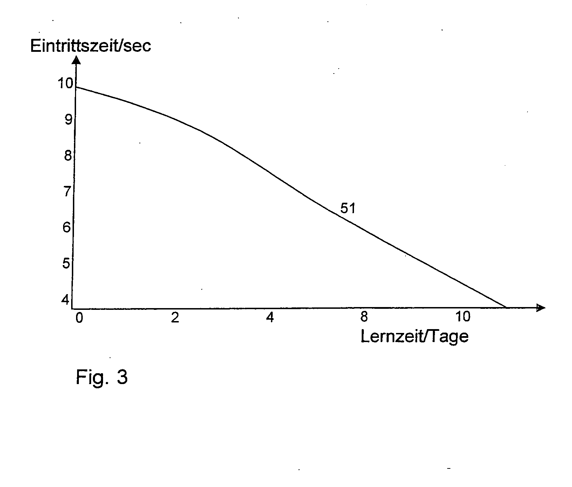

In Figur 3 ist eine Lernkurve 51 für den Einstiegsvorgang eines unerfahrenen Tieres mit der Zeit dargestellt. Die für den Einstieg in ein Melkkarussell benötigte Zeit nimmt wenigstens während der ersten 10 Tage kontinuierlich ab. Das kann bei der Auswahl der Verfahrvorgaben berücksichtigt werden. Wenn beispielsweise viele Tiere hintereinander stehen, die noch sehr unerfahren sind, kann das Karussell für die Einstiegszeit dieser Tiere entsprechend langsamer verfahren, um anschließend wieder zu beschleunigen.

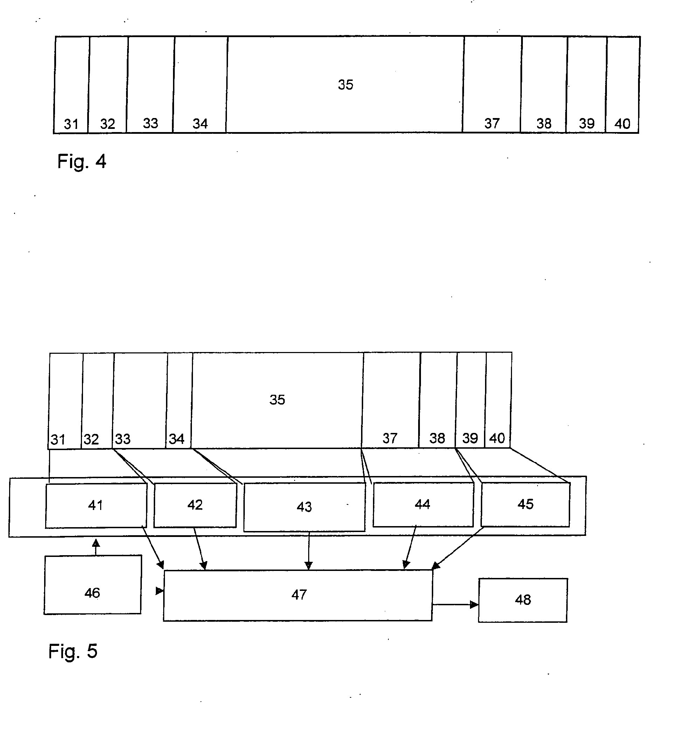

In Figur 4 sind verschiedene Konstellationen der Melkvorrichtung dargestellt. Dazu zählen der "Zutrieb" der Tiere 31, der "Einstieg" der Tiere 32, die "Vorbehandlung des Euters" der Tiere 33 (Vordippen, Reinigung des Euters im Bedarfsfalle), das "Ansetzen" der Melkbecher 34, das "Stimulieren, Melken, Abnehmen, Wiederansetzen, Behandeln" 35. Weiterhin zählen zu den Konstellationen auch die "Nachbehandlung" 37, die "Euterkontrolle" 38, der "Ausstieg" 39 und der "Wegtrieb" 40.

In Figur 5 ist ein Zusammenwirken der unterschiedlichen Konstellationen und Module in Abhängigkeit verschiedener Einflüsse dargestellt. Die Konstellationen 31 und 32 sind hier zu dem Modul "Einsteigen" 41 zusammengefasst. Die Konstellationen 33 und 34 sind zu dem Modul "Vorbereiten" 42, die Konstellation "Stimulieren, Melken, Abnehmen, Wiederansetzen, Behandeln" ist hier zu dem Modul "Verfahren auf der Plattform" 43 zusammengefasst, die Konstellationen 37 und 38 ergeben das Modul "Nachbehandeln" 44 und die Konstellationen "Ausstieg" 39 und "Wegtrieb" 40 ergeben das Modul "Austeigen" 45. Hier beeinflussen alle gezeigten Module die Koordination der Verfahrvorgaben, wie auch manuelle Vorgaben 46 z.B. des Bedieners. Durch eine geeignete Koordination 47 werden die Verfahrvorgaben 48 abgeleitet.

## Patentansprüche

1. Verfahren zur Bestimmung wenigstens einer Verfahrvorgabe eines Bodens einer Vorrichtung, die zum Melken wenigstens eines Tieres geeignet ist, insbesondere eines Melkkarussells,
bei dem Daten wenigstens eines zu melkenden Tieres, aus denen eine Beziehung zwischen der Vorrichtung und dem Tier hervorgeht, bereitgestellt werden,
und bei dem die aktuelle Konstellation in der Vorrichtung ermittelt und die Verfahrvorgabe in Abhängigkeit von den Daten und der aktuellen Konstellation bestimmt wird.

2. Verfahren nach Anspruch 1, bei dem die aktuelle Konstellation durch Gewichtung einzelner Situationen in der Vorrichtung ermittelt wird.

3. Verfahren nach Anspruch 1 oder 2, bei dem zur Bestimmung der Verfahrvorgaben neben den Tierdaten der Konstellation auch Daten einbezogen werden können, welche einer Gruppe von Daten entnommen sind, welche Art und Zeitpunkte von Bedienereingriffen, Bedienerdaten, Betriebsparameter der Anlage, Zustandsgrößen der Melkanlage oder deren Komponenten sowie sensorischer Komponenten, die im Melkbetrieb eingesetzt werden, umfasst.

4. Verfahren nach mindestens einem der vorhergehenden Ansprüche, bei dem aus der aktuellen Konstellation durch Auswertung einzelner Teile derselben in der Vorrichtung mehrere Verfahrvorgaben ermittelt werden, die bestimmte Situationen abbilden.

5. Verfahren nach mindestens einem der vorhergehenden Ansprüche, bei dem aus den Verfahrvorgaben der einzelnen Situationen eine Gesamtverfahrvorgabe für die Vorrichtung ermittelt wird.

6. Verfahren nach mindestens einem der vorhergehenden Ansprüche, bei dem die aktuelle Konstellation kontinuierlich oder diskontinuierlich ermittelt wird.

7. Verfahren nach Anspruch 6, bei dem die aktuelle Konstellation in vorgegebenen Zeitabständen ermittelt wird.

8. Verfahren nach mindestens einem der vorhergehenden Ansprüche, bei dem eine erneute Ermittlung der aktuellen Situation durch Eintritt wenigstens eines Ereignisses ausgelöst wird.

9. Verfahren nach mindestens einem der vorhergehenden Ansprüche, bei dem das Verhalten einzelner Tiere sensorisch erfasst und mit den Daten verglichen werden.

10. Verfahren nach Anspruch 9, bei dem das Verhalten einzelner Tiere im Eingangs- und/oder Ausgangsbereich der Vorrichtung erfasst werden.

11. Verfahren nach mindestens einem der vorausgehenden Ansprüche, wobei das Verhalten weiterer Automatisierungseinrichtungen an oder innerhalb der Vorrichtung erfasst wird.

12. Verfahren nach mindestens einem der vorausgehenden Ansprüche, bei dem mit der Steuerungseinheit Automatisierungskomponenten des Karussells oder Automatisierungseinrichtungen mit den Verfahrvorgaben synchronisiert oder koordiniert werden.

13. Verfahren nach mindestens einem der Ansprüche 9 bis 12, bei dem die Daten in Abhängigkeit vom Verhalten des Tieres aufbereitet werden.

14. Verfahren nach mindestens einem der vorhergehenden Ansprüche, bei dem die Verfahrvorgabe und die zugehörige Konstellation bzw. der Verlauf der Verfahrvorgabe bzw. der Geschwindigkeit und der Konstellationen gespeichert werden und Startgrößen zur Bestimmung einer neuen Verfahrvorgabe bei vergleichbarer Konstellation bilden.

15. Verfahren nach mindestens einem der vorhergehenden Ansprüche, bei dem zu jedem Tier aus den Daten ein Tierprofil erstellt und eine Belegung der Vorrichtung nach vorgegebenen Präferenzen der Tierprofile erfolgt.

16. Verfahren nach mindestens einem der vorhergehenden Ansprüche, bei dem manuelle Eingriffe während des Betriebes der Vorrichtung und deren Ursache erfasst und bei der Bestimmung einer neuen Geschwindigkeit berücksichtigt werden.

17. Verfahren nach mindestens einem der vorhergehenden Ansprüche, bei dem die Verfahrvorgaben wenigstens eine Kenngröße aus einer Gruppe von Kenngrößen beinhalten, welche die Geschwindigkeit, die Beschleunigung, die Position und die Änderung der Beschleunigung, sowie zeitliche Änderungen und Profile der Kenngrößen umfasst.

18. Verfahren nach mindestens einem der vorhergehenden Ansprüche, bei dem zu jedem Tier aus den Tierdaten ein Tierprofil erstellt und eine Belegung der Vorrichtung nach vorgegebenen Präferenzen der Tierprofile erfolgt.

19. Verfahren nach Anspruch 18, wobei die Gruppierung der Tiere durch Vergleich der Tierprofile erfolgt.

20. Verfahren nach mindestens einem der vorhergehenden Ansprüche, wobei eine Veränderung der Verfahrvorgaben beim Ein- oder Aussteigen von Tieren so durchgeführt wird, dass ein Tier begünstigt ein- oder aussteigen kann.

21. Vorrichtung zum Melken einer Mehrzahl an Tieren,
mit einer bewegbaren Plattform;
mit wenigstens einem Eingangsbereich und wenigstens einem Ausgangsbereich;
wenigstens einer Steuerungseinheit;
wenigstens einer Speichereinheit, in welcher Tierdaten der Tiere abgelegt sind;
wenigstens einer Sensoreinrichtung, welche die Tiere erkennt;
wobei die Steuerungseinheit derart ausgebildet und steuerbar ist, dass aus den Tierdaten eine geeignete Verfahrvorgabe für die bewegbare Plattform ermittelbar ist.

22. Vorrichtung nach Anspruch 21, **dadurch gekennzeichnet,**
**dass** wenigstens eine Sensoreinrichtung derart angeordnet ist, dass Tiere, welche in den Eingangsbereich oder auf die Plattform gelangen erkennbar sind.

23. Vorrichtung nach Anspruch 21 oder 22, **dadurch gekennzeichnet,**
**dass** wenigstens eine Selektionseinrichtung vorgesehen ist, welche derart strukturiert ist, dass die Reihenfolge der Tiere auf der Plattform beeinflussbar ist, um eine gewünschte Verfahrvorgabe zu realisieren.

24. Vorrichtung nach Anspruch 23, **dadurch gekennzeichnet,**
**dass** mit der Steuereinrichtung die Selektionseinrichtung derart steuerbar ist, dass Tiere mit vergleichbaren Tierdaten benachbart auf der Plattform platzierbar sind.
